# EUROPEAN PATENT SPECIFICATION

(11) **EP 0 475 056 B1**
(45) Date of publication and mention of the grant of the patent: **19.03.1997**
(21) Application number: 91112856.9
(22) Date of filing: 09.12.1987
(51) Int. Cl.: G05F 3/28, H03F 1/56, H03F 3/45

(54) **Current-regulation of an error amplifier**
Stromreglung von einem Fehlerverstärker
Régulation de courant d'un amplificateur d'erreur

(30) Priority: 18.12.1986 US 943187
(43) Date of publication of application: 18.03.1992
(62) Divisional of application: 87310847.6
(73) Proprietor: RCA Thomson Licensing Corporation, Princeton New Jersey 08540 (US)
(72) Inventor: Craft, Jack, Bridgewater, New Jersey (US); Yorkanis, Bernard Joseph, South Plainfield, New Jersey (US); Low, Michael Louie, Old Bridge, New Jersey (US)
(74) Representative: Ahrens, Thomas, Dipl.-Phys.

(56) References cited:
- GB-A- 2 027 306
- US-A- 3 668 541
- US-A- 3 891 935
- US-A- 3 916 331
- PATENT ABSTRACTS OF JAPAN no. 36 (E-227)(1473) 16 February 1984 & JP-A-58 194 413 (MITSUBISHI DENKI K.K ) 12 November 1983

## Description

The invention relates to a differential amplifier for a power supply, for example in a television apparatus.

GB-A-2027306 discloses a differential amplifier having a pair of differential transistors the emitters of which are coupled to a current sink transistor of a first current mirror.

An input at the base of one of the differential transistor is coupled to a second current mirror. A reference transistor which substantially corresponds to the said one of the differential transistor has a base coupled to the second current mirror and an emitter coupled to the first current mirror. The base bias current of the said one differential transistor and of the reference transistor is provided by the first mirror. The emitter current is provided by the second mirror. In this way the input signal source is not loaded by the base bias current.

In accordance with the present invention, there is provided an amplifier comprising first and second transistors that are coupled to form a differential amplifier; an input stage coupled at a first junction terminal to a control electrode of said second transistor for establishing a voltage level at said control electrode of said second transistor in accordance with a voltage that is developed at an input terminal of said input stage such that an output current flowing in said input stage is coupled to said first junction terminal; a source of a first current; characterized by a third transistor; and a current mirror arrangement coupled to said third transistor and responsive to said first current and to a control electrode current of said third transistor for generating at an output terminal of said current mirror arrangement a second current that is coupled to said first junction terminal, said second current having a first portion derived from said first current and a second portion derived from said control electrode current of said third transistor, said current mirror arrangement supplies both a control electrode current of said second transistor and an output current of said input stage.

In the drawing :
FIGURE 1 illustrates a simplified schematic diagram of a power supply regulator circuit that includes an error amplifier and level shifter;
FIGURE 2 illustrates a detailed schematic diagram of the error amplifier in accordance with the invention in combination with the level shifter of figure 1; and
FIGURES 3, 4, 5 and 6 illustrate alternative level shifters.

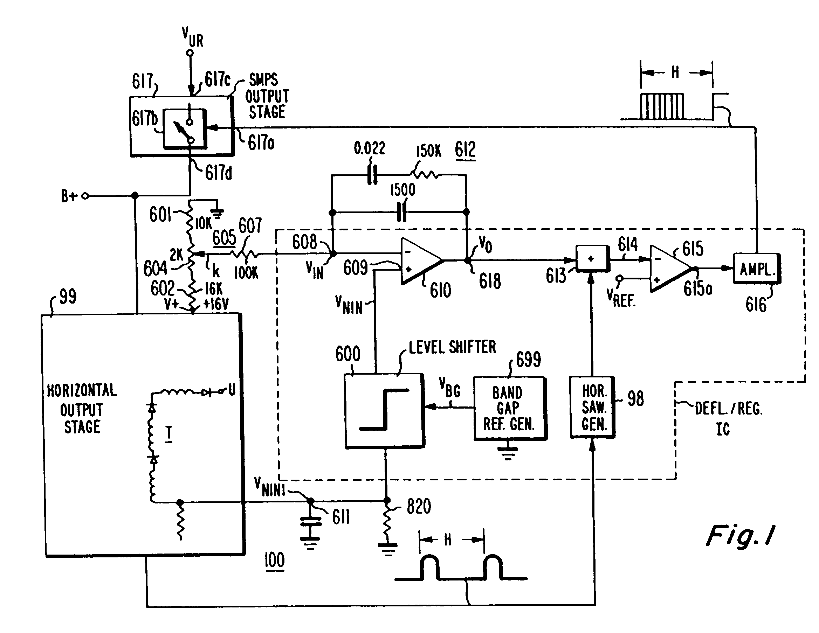

Figure 1 illustrates a simplified schematic diagram of a power supply of a television receiver, not shown in the figures, that includes a regulator 100 that is an integrated circuit that regulates a supply voltage B+. Voltage B+ may be used, for example, to energize a horizontal deflection circuit or output stage 99 of the television receiver.

A voltage V+, representative of voltage B+, is obtained from output stage 99. Voltage V+ is coupled to a voltage divider 605 that includes series coupled resistors 601, 604 and 602. Resistor 604 includes a wiper k for developing at wiper K a voltage that is representative of, for example, voltage B+. The voltage at wiper K, that is adjustable by varying the position of wiper k, is coupled to an inverting input terminal 608 of an error amplifier 610 according to the present invention via a resistor 607.

A small voltage that is proportional to the beam current in the CRT of the receiver is coupled from a tertiary winding of transformer T to a terminal 611 to form a voltage V_{NINI} that is indicative of the beam current.

Voltage V_{NINI} that varies when a variation of the beam current occurs, is coupled via a level shifter 600, to a noninverting input terminal 609 of error amplifier 610 to produce an input voltage V_{NIN}. Level shifter 600 establishes a fixed offset voltage between terminals 611 and 609 that is determined by a voltage V_{BG}. Voltage V_{BG} is generated in a bandgap type voltage source 699. Bandgap type voltage source 699 advantageously maintains voltage V_{BG} constant such that voltage V_{BG} is affected significantly less by component aging or tolerance than would have occurred had a zener diode been used. As explained later on the feed back arrangement of regulator 100 causes voltage B+ to be such that voltage V_{IN} becomes equal to voltage V_{NIN}.

An integrating filter 612 is coupled between inverting input terminal 608 and an output terminal 618 of amplifier 610 to provide the loop filter of regulator 100. A filtered error voltage Vₒ, developed at terminal 618 is coupled to a first input terminal of an adder 613. A horizontal rate sawtooth generator 98 develops a horizontal rate signal, having an upramping portion, which is added to error voltage Vₒ in adder 613. The sum signal that is also upramping, is applied to an inverting input terminal 614 of a comparator 615 functioning as a pulse width modulator.

When, during its upramping portion, the output of adder 613 becomes more positive than a constant DC voltage V_{REF}, that is coupled to a noninverting input terminal of comparator 615, a negative going transition at an output terminal 615a of comparator 1615 is coupled via a buffer amplifier 616 to a control terminal 617a of a switch 617b of a switch mode power supply output stage 617 to turn on switch 617b of output stage 617.

An input terminal 617c of output stage 617 is coupled to unregulated voltage V_{UR}. Regulated voltage B+ is developed at an output terminal 617d of output stage 617.

The duration, during each horizontal period, H, in which switch 617b conducts is determined by the level of error voltage Vₒ of error amplifier 610. Thus, regulated voltage B+ is determined by voltage V_{NIN}. As indicated before, voltage V_{NIN} is produced by level shifter 600, embodying an aspect of the invention, that is described now in detail.

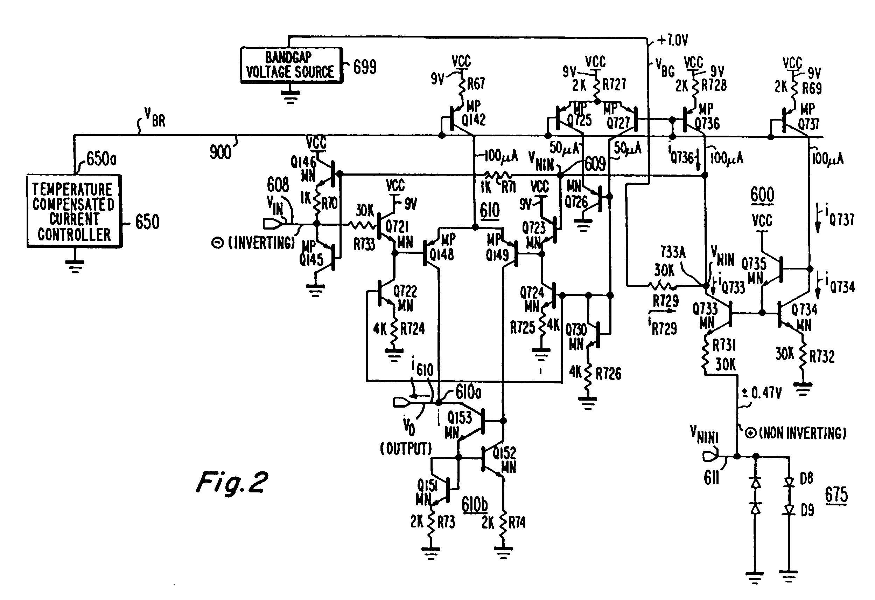

FIGURE 2 illustrates a schematic diagram of level shifter 600 of FIGURE 1 and of error amplifier 610 according to the present invention. Similar numbers of FIGURES 1 and 2 represent similar items or functions. Level shifter 600 of FIGURE 2 is temperature compensated over a wide range of ambient operating temperatures, such as between 0°C and 70°C, to produce voltage V_{NIN} that is substantially unaffected by a change in the temperature within such range.

A temperature compensated current control arrangement 650 generates a control voltage V_{BR} on a rail signal line 900. Rail signal line 900 is coupled to the base electrode of each of transistors Q142, Q725, Q727, Q736 and Q737. The emitter electrodes of the abovementioned transistors are coupled through corresponding resistors to a fixed DC voltage V_{cc}. Transistors Q725 and Q727 have their emitters both connected to source resistor R727. Current control arrangement 650 controls voltage V_{BR} in such a way that the collector current in each of the abovementioned transistor e.g. Q727, Q725 stays substantially constant when the temperature changes. An example of an arrangement that is similar to current control arrangement 650 is described in detail in US Patent No. 3,886,435, in the name of S.A. Steckler, entitled VBE VOLTAGE SOURCE TEMPERATURE COMPENSATION NETWORK.

Level shifter 600 includes transistors Q736 and Q737. The emitter currents in transistors Q736 and Q737 are controlled by resistors R728 and R69, respectively, having the same value, so as to cause the respective collector currents of transistors Q736 and Q737, that are temperature compensated, to be equal. The collector of transistor Q737 is coupled to a current mirror arrangement that includes transistors Q733, Q734 and Q735. The collector of transistor Q737 is coupled to the collector of transistor Q734. The emitter of transistor Q735 is coupled to each of the bases of transistors Q733 and Q734. Transistor Q735 provides the base current drive to each of transistors Q733 and Q734. The emitter of transistor Q734 is coupled to ground via a resistor R732. The P-N junction of transistor Q734 between the base and emitter electrodes of transistor Q734, provides temperature compensation that compensates for a temperature related variation of the base-emitter voltage of transistor Q733. The emitter of transistor Q733 is coupled through resistor R731 to terminal 611, where voltage V_{NINI} of FIGURE 1 is developed. The value of resistor R731 is equal to that of resistor R732. Voltage V_{NINI} is prevented from exceeding predetermined limits in either polarity by a diode network 675. The collector of transistor Q733 is coupled to the collector of transistor Q736 at a junction terminal 733A.

Assume that voltage V_{NINI} is zero. In this case the current mirror arrangement of transistors Q733, Q734 and Q735, produces a collector current i_{Q733} in transistor Q734 because the base current of transistor Q735 is negligible. As explained before, when voltage V_{NINI} is zero, collector current i_{Q736} in transistor Q736 is equal to collector current i_{Q737} in transistor Q737 over a wide temperature range. Also, when voltage V_{NINI} is zero, each of collector current i_{Q734} over such wide temperature range. It follows that current i_{Q733} is also equal to current i_{Q736}.

Bandgap type voltage source 699 supplies temperature compensated reference voltage V_{BG} that is coupled via a resistor R729 to terminal 733A. Because, as described before, when voltage V_{NINI} is zero, current i_{Q733} is supplied entirely by current i_{Q736}, and because the impedance at terminal 733A, that is contributed by the collectors of transistors Q733 and Q736 is high, a current i_{R729} in resistor R729 is zero; therefore, voltage V_{NIN} at terminal 733A is equal to voltage V_{BG}. Thus in accordance with an aspect of the invention, when voltage V_{NINI} is zero, voltage V_{NIN} is level shifted by an amount that is equal to voltage V_{BG}.

When voltage V_{NINI} at terminal 611 is different from zero, currents i_{Q736} and i_{Q737} will not be equal. The difference current between currents i_{Q733} and i_{Q736} will cause a voltage to develop across resistor R729 that, in turn, will cause a corresponding change in voltage V_{NIN} at terminal 733A. Because transistor Q733 is coupled, relative to voltage V_{NINI}, as a common base amplifier, and because resistors R731 and R729 are, illustratively, equal, the gain, or the ratio between voltage V_{NIN} and voltage V_{NINI}, is one, resulting in an amplifier having a unity gain.

Voltage V_{NIN}, that is level shifted relative to voltage V_{NINI} by an amount that is equal to voltage V_{BG}, follows variations of voltage V_{NINI} that occur in a range between positive and negative values.

Voltage V_{BG} is temperature compensated and has a tolerance range that is narrow relative to, for example, a zener diode. Furthermore, component aging affects voltage V_{BG} substantially less than it affects, for example, the breakdown voltage of a zener diode. Moreover, the level shifting caused by level shifter 600 is, advantageously, less susceptible to temperature, aging and noise when compared with that produced by a corresponding level shifter in the prior art that utilizes a zener diode interposed between a beam current input terminal and a noninverting input terminal of a differential amplifier to perform such level shifting.

Should a temperature change cause a corresponding change in current i_{Q736}, for example, that, as indicated before, would be relatively small, transistors Q737, Q733, Q734 and Q735 will cause a proportional change in current i_{Q733} to occur that will prevent even such small change in temperature from affecting the difference current between currents i_{Q736} and i_{Q733}. Therefore, when voltage V_{NINI} is zero, voltage V_{NIN} is, advantageously, not affected by collector currents i_{Q736} and i_{Q737}, but is entirely determined by voltage V_{BG} that is temperature compensated.

It should be understood that temperature compensation may be adequate even when voltage V_{NINI} is significantly different from zero. If temperature compensation, in this case, is inadequate, a further improvement in temperature compensation may be obtained by coupling the terminal of, for example, resistor R732, that in FIGURE 2 is grounded, to a voltage that is different from zero and that is related to, for example, voltage V_{NINI}.

Advantageously, voltage V_{BG}, as explained before, is maintained at tight tolerances, is temperature compensated and is substantially unaffected by components aging. Therefore, advantageously, no factory temperature burn-in process is required prior to the instalment of regulator 100 of FIGURE 1 in the television receiver. Furthermore, voltage divider 605 that includes resistors 601, 604 and 602 is required to compensate, advantageously, only for a narrower tolerance range than in prior art circuits in which a zener diode is used for performing the level shifting function of level shifter 600 of FIGURE 2.

The error amplifier 610 according to the present invention will now be described in more detail. As shown in Figure 2, the error amplifier 610 includes a differential amplifier comprising transistors Q148 and Q149, the emitters of which are coupled to a common current source transistor Q142.

Voltage Vᵢₙ at terminal 608 is coupled to the base of transistor Q148 via an emitter-follower transistor Q721. Voltage V_{NIN} at terminal 609 is coupled to the base of transistor Q149 via an emitter-follower transistor Q723.

The clamping operation of a pair of transistors Q145 and Q146 prevents voltage V_{IN} from being above voltage V_{BG} or from being below voltage V_{BG} by more than a predetermined magnitude.

A first current mirror arrangement 610b that is coupled to the collectors of transistors Q148 and Q149 causes a current i₆₁₀, coupled to integrating filter 612 of FIGURE 1, to be equal to the difference between the collector currents in transistors Q148 and Q153. Consequently, current i₆₁₀ that is coupled to filter 612 of FIGURE 1, is proportional to the difference between voltages V_{IN} and V_{NIN}. The proportionality factor is determined by the gain of error amplifier 610.

A second current mirror arrangement is coupled to the bases of the differential transistors Q148, Q149. The second arrangement comprises like transistors Q722, Q724 having collectors coupled to the bases, emitters coupled by like resistors R724, R725 to ground and bases commonly coupled to the collector and base of a mirror transistor Q730.

The emitter of transistor Q730 is coupled to ground via resistor R726 equal to resistors R724 and R725.

The collector base connection of mirror transistor Q730 is connected to the collector of transistor Q727 and via a transistor Q726 to the collector of transistor Q725. The base of transistor Q726 is connected to mirror transistor Q730 and the collector emitter path of Q726 is connected to ground and to the collector transistor Q725.

The total current flowing through Q730 and thus V_{BE} of Q730 is determined by the sum of the collector current of Q727 and the base current of Q726. V_{BE} of transistors Q722 and Q724 is determined by V_{BE} of mirror transistor Q730, and thus the collector emitter currents of transistor Q722 and Q724. The collector emitter currents of transistor Q722 (or Q724) equals to the sum of the base current of transistor Q148 (or Q149) and the emitter current of transistor Q721 (or 723).

As discussed above controller 650 maintains the collector current of Q727 constant with varying temperature.

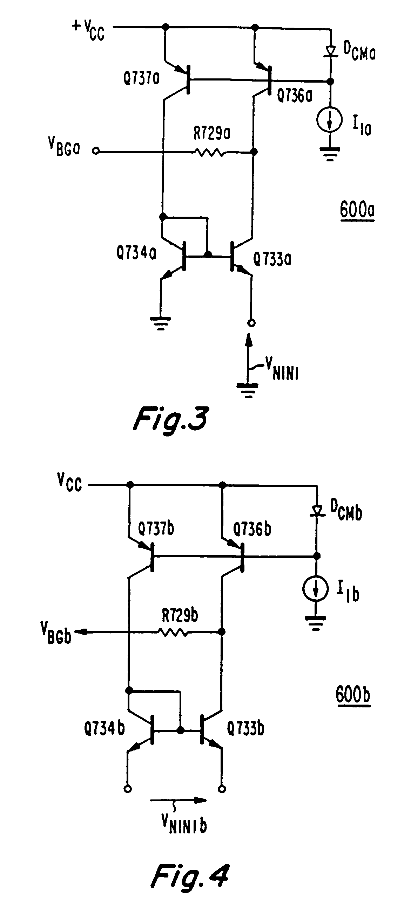

FIGURES 3, 4, 5 and 6 illustrate alternative level shifters 600a, 600b, 600c and 600d, respectively. In FIGURES 2-6, numbers and symbols of similar items or functions are similar except that they include the letters a, b, c and d, in FIGURES 3, 4, 5 and 6, respectively.

In FIGURE 3, resistors R731 and R732, that are used in the circuit of FIGURE 2, were eliminated. Without resistors R731 and R732, the gain of amplifier 600a of FIGURE 3 is, advantageously, higher than unity.

In FIGURE 3, a diode D_{cma} and a temperature compensated current source I₁ₐ cause the collector currents in transistors Q737a and Q736a to be, for example, equal. Similarly, transistor Q734a causes the collector current in transistor Q733a to be, for example, equal to that in each of transistors Q737a and Q736a when voltage V_{NINI} is zero.

In FIGURE 4, voltage VNINIb is applied differentially between the emitters of transistors Q733b and Q734b. Such arrangement provides, advantageously, an improved common mode rejection.

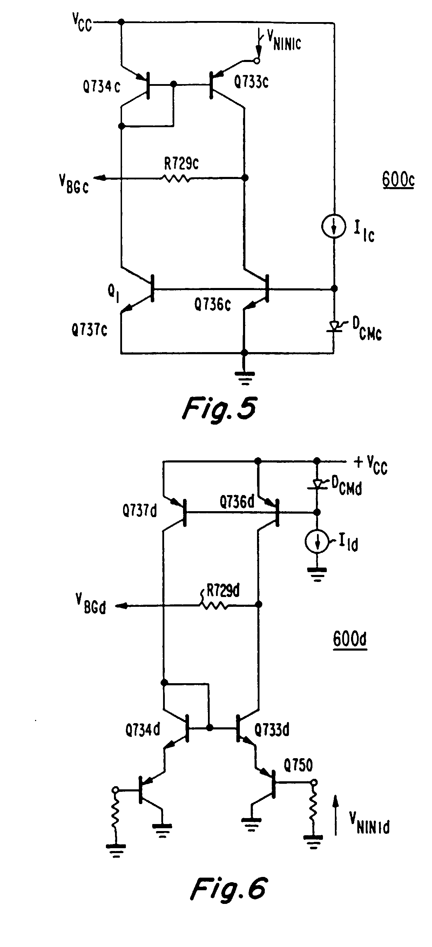

In FIGURE 5 the type N-P-N or P-N-P, of the corresponding transistors is opposite than that in FIGURE 2 so that voltage V_{NINIc} may, if desired, be referenced to voltage V_{cc}, instead of to ground.

In FIGURE 6, the input impedance to voltage V_{NINId} is, advantageously, higher than to voltage V_{NINI} of FIGURE 2 because of the usage of a transistor Q750 that is coupled as an emitter follower.

## Claims

1. An amplifier comprising :
first (Q149) and second (Q148) transistors that are coupled to form a differential amplifier (610);
an input stage (Q721) coupled at a first junction terminal (base of Q148) to a control electrode (base) of said second transistor (Q148) for establishing a voltage level at said control electrode of said second transistor (Q148) in accordance with a voltage (Vᵢₙ) that is developed at an input terminal (608) of said input stage such that an output current flowing in said input stage is coupled to said first junction terminal;
a source (Q727) of a first current; characterized by
a third transistor (Q726); and
a current mirror arrangement (Q722,Q730) coupled to said third transistor (Q726) and responsive to said first current (from Q727) and to a control electrode current of said third transistor (Q726) for generating at an output terminal of said current mirror arrangement (Q722,Q730) a second current (at collector of Q722) that is coupled to said first junction terminal (base of Q148), said second current having a first portion derived from said first current (from Q727) and a second portion derived from said control electrode current of said third transistor (Q726), said current mirror arrangement supplies both a control electrode current (i_{bQ148}) of said second transistor and an output current (I_{eQ72l}) of said input stage.

2. An amplifier according to Claim 1,
characterized in that said input stage comprises a fourth transistor (Q721) coupled as am emitter follower, and said output current of said input stage flows in an emitter electrode of said fourth transistor (Q721).

3. An amplifier according to Claim 1,
characterized in that said first current source (Q727) generates said first current having a constant value.

4. An amplifier according to Claim 1,
characterized in that said first (Q149), second (Q148) and third (Q726) transistors are bipolar transistors of the same type.

5. An amplifier according to Claim 1,
characterized in that said current mirror arrangement (Q722,Q730) includes a fourth transistor (Q722) that generates said second current that flows in the same direction as said first current (in Q727) and that is equal to the sum of said first current and said control electrode current of said third transistor (Q726).

6. An amplifier according to Claim 1,
characterized in that said third transistor (Q726) is coupled outside a signal path formed between an input terminal (608) and an output terminal (610a) of said amplifier.

7. An amplifier according to Claim 1,
characterized by means (650) for generating a temperature compensated control voltage (V_{BR}) that is coupled to a control electrode of a bipolar, further transistor (Q727) for generating said first current at a collector electrode of said further transistor (Q727) that is unaffected by a variation of a current gain characteristic of said further transistor (Q727).

8. An amplifier according to Claim 7,
characterized in that said current mirror arrangement further comprises an additional transistor (Q730) coupled in a diode configuration for conducting therethrough a current that is equal to a sum of said first current (from Q727) and said control electrode current of said third transistor (Q726).

9. An amplifier according to Claim 8,
characterized in that said current mirror arrangement includes another transistor (Q722) having a base electrode that is coupled to said additional transistor (Q730) and a collector electrode that is coupled to said control electrode of said second transistor (Q148).

10. An amplifier according to Claim 9 further comprising a second additional transistor (Q724) having a base electrode that is coupled to said additional transistor (Q730) and a collector electrode that is coupled to a base electrode of said first transistor (Q149).

11. An amplifier according to Claim 1,
characterized in that said amplifier forms an error amplifier in a regulator of a television apparatus power supply.

## Patentansprüche

1. Ein Verstärker umfassend:
erste (Q149) und zweite (Q148) Transistoren, die zur Bildung eines Differentialverstärkers (610) miteinander verbunden sind;
eine Eingangsstufe (Q721), die an einem ersten Verbindungsanschluß (Basis von Q148) mit einer Steuerelektrode (Basis) des zweiten Transistors (Q148) verbunden ist, um einen Spannungspegel an der Steuerelektrode des zweiten Transistors (Q148) in Übereinstimmung mit einer Spannung (V_{IN}) zu erzeugen, die an einem Eingangsanschluß (608) der Eingangsstufe entwickelt wird, so daß ein in der Eingangsstufe fließender Ausgangsstrom zu dem ersten Verbindungsanschluß gekoppelt wird;
eine Quelle (Q727) eines ersten Stromes;
gekennzeichnet durch
einen dritten Transistor (Q726) ; und
eine Stromspiegelanordnung (Q722, Q730), die mit dem dritten Transistor (Q726) verbunden ist und auf den ersten Strom (von Q727) und auf einen Steuerelektrodenstrom des dritten Transistors (Q726) anspricht, um an einem Ausgangsanschluß der Stromspiegelanordnung (Q722, Q730) einen zweiten Strom (am Kollektor von Q722) zu erzeugen, der mit dem ersten Verbindungsanschluß (Basis von Q148) verbunden ist, wobei der zweite Strom einen ersten Teil aufweist, der von dem ersten Strom (von Q727) stammt, und einen zweiten Teil aufweist, der von dem Steuerelektrodenstrom des dritten Transistors (Q726) stammt, wobei die Stromspiegelanordnung sowohl einen Steuerelektrodenstrom (i_{bQ148}) des zweiten Transistors als auch einen Ausgangsstrom (I_{eQ721}) der Eingangsstufe bereitstellt.

2. Verstärker gemäß Anspruch 1, dadurch gekennzeichnet, daß die Eingangsstufe einen vierten Transistor (Q721) aufweist, der als ein Emitterfolger geschaltet ist, und daß der Ausgangsstrom der Eingangsstufe in eine Emitterelektrode des vierten Transistors (Q721) fließt.

3. Verstärker gemäß Anspruch 1, dadurch gekennzeichnet, daß die erste Stromquelle (Q727) den ersten Strom mit einem konstanten Wert erzeugt.

4. Verstärker nach Anspruch 1, dadurch gekennzeichnet, daß die ersten (Q149), zweiten (Q148) und dritten (Q726) Transistoren bipolare Transistoren des gleichen Typs sind.

5. Verstärker nach Anspruch 1, dadurch gekennzeichnet, daß die Stromspiegelanordnung (Q722, Q730) einen vierten Transistor (Q722) aufweist, der den zweiten Strom erzeugt, der in die gleiche Richtung wie der erste Strom (in Q727) fließt, und der gleich der Summe des ersten Stromes und des Steuerelektrodenstromes des dritten Transistors (Q726) ist.

6. Verstärker nach Anspruch 1, dadurch gekennzeichnet, daß der dritte Transistor (Q726) außerhalb eines Signalpfades verbunden ist, der zwischen einem Eingangsanschluß (608) und einem Ausgangsanschluß (610a) des Verstärkers gebildet wird.

7. Verstärker nach Anspruch 1, gekennzeichnet durch ein Mittel (650) zum Erzeugen einer temperaturkompensierten Steuerspannung (V_{BR}), die mit einer Steuerelektrode eines bipolaren, weiteren Transistors (Q727) zum Erzeugen des ersten Stroms an einer Kollektorelektrode des weiteren Transistors (Q727) verbunden ist, der von einer Schwankung einer Stromverstärkungscharakteristik des weiteren Transistors (Q727) unbeeinflußt ist.

8. Verstärker nach Anspruch 7, dadurch gekennzeichnet, daß die Stromspiegelanordnung ferner einen zusätzlichen Transistor (Q730) aufweist, der in einer Diodenkonfiguration geschaltet ist, um durch sich einen Strom zu leiten, der gleich einer Summe des ersten Stroms (von Q727) und des Steuerelektrodenstroms des dritten Transistors (Q726) ist.

9. Verstärker nach Anspruch 8, dadurch gekennzeichnet, daß die Stromspiegelanordnung einen weiteren Transistor (Q722) mit einer Basiselektrode, die mit dem zusätzlichen Transistor (Q730) gekoppelt ist, und einer Kollektorelektrode aufweist, die mit der Steuerelektrode des zweiten Transistors (Q148) verbunden ist.

10. Verstärker nach Anspruch 9, der ferner einen zweiten zusätzlichen Transistor (Q724) mit einer Basiselektrode, die mit dem zusätzlichen Transistor (Q730) verbunden ist und mit einer Kollektorelektrode aufweist, die mit einer Basiselektrode des ersten Transistors (Q149) verbunden ist.

11. Verstärker nach Anspruch 1, dadurch gekennzeichnet, daß der Verstärker einen Fehlerverstärker in einem Regler für eine Stromversorgung eine Fernsehgeräts bildet.

## Revendications

1. Amplificateur comprenant :
un premier (Q149) et un second (Q148) transistors qui sont couplés pour former un amplificateur différentiel (610) ;
un étage d'entrée (Q721) couplé au niveau d'une première borne de jonction (base de Q148) à la base d'une électrode de commande dudit second transistor (Q148) permettant d'établir un niveau de tension au niveau de ladite électrode de commande dudit second transistor (Q148) conformément à une tension (Vin) qui est délivrée au niveau d'une borne d'entrée (608) dudit étage d'entrée, de sorte qu'un courant de sortie circulant dans ledit étage d'entrée est couplé à ladite première borne de jonction ;
une source (Q727) d'une première intensité ;
caractérisé
par un troisième transistor (Q727) ; et
une configuration de miroir d'intensité (Q722, Q730) couplée audit troisième transistor (Q726) et réagissant à ladite première intensité (de Q727) et à une intensité d'électrode de commande dudit troisième transistor (Q726) pour générer (au niveau d'une borne de sortie de ladite configuration de miroir d'intensité (Q722, Q730) une seconde intensité au niveau du collecteur de Q722 qui est couplée à ladite première borne de jonction (base de Q148), ladite seconde intensité étant caractérisée par une première portion dérivée de ladite première intensité (de Q727) et une seconde portion dérivée de ladite intensité d'électrode de commande dudit troisième transistor (Q726). Ladite configuration de miroir des intensités délivre une intensité d'électrode de commande (ibQ148) dudit second transistor et une intensité de sortie (le Q721) dudit étage d'entrée.

2. Amplificateur conforme à la revendication 1, caractérisé en ce que ledit étage d'entrée comprend un quatrième transistor (Q721) couplé en collecteur commun, et en ce que ledit courant de sortie dudit étage d'entrée circule dans une électrode d'émetteur dudit quatrième transistor (Q721).

3. Amplificateur conforme à la revendication 1, caractérisé en ce que ladite première source d'intensité (Q727) génère ladite première intensité définie par une valeur constante.

4. Amplificateur conforme à la revendication 1, caractérisé en ce que les premiers (Q149), second (Q148) et troisième transistors (Q726) sont des transistors bipolaires du même type.

5. Amplificateur conforme à la revendication 1, caractérisé en ce que ladite configuration de miroir d'intensité (Q722, Q730) comprend un quatrième transistor (Q722) qui génère ladite seconde intensité qui circule dans le même sens que ladite première intensité (dans Q727) et qui équivaut à la somme de ladite première intensité et de ladite intensité de l'électrode de commande dudit troisième transistor (Q726).

6. Amplificateur conforme à la revendication 1, caractérisé en ce que le troisième transistor (Q726) est couplé en dehors d'un parcours formé entre une borne d'entrée (608) et une borne de sortie (610a) dudit amplificateur.

7. Amplificateur conforme à la revendication 1, caractérisé par le moyen (650), permettant de générer une tension de commande de compenser en température (Vbr) et couplée à une électrode de commande d'un transistor bipolaire (Q727) pour générer ladite première intensité au niveau d'une électrode de commande dudit transistor (Q727), qui ne sera pas conditionnée par la variation d'une caractéristique de gain d'intensité dudit transistor (Q727).

8. Amplificateur conforme à la revendication 7, caractérisé en ce que ladite configuration du miroir d'intensité comprend également un transistor supplémentaire (Q730) couplé dans une configuration de diode pour conduire (dans ladite diode) une intensité égale à la somme de ladite première intensité (de Q727) et d'une intensité d'électrode de commande dudit troisième transistor (Q726).

9. Amplificateur conforme à la revendication 8, caractérisé en ce que ladite configuration d'un miroir d'intensité comprend un autre transistor (Q722) doté d'une électrode de base qui est couplée audit transistor supplémentaire (Q730) et une électrode de collecteur qui est couplée à ladite électrode de commande dudit second transistor (Q148).

10. Amplificateur conforme à la revendication 9, comprenant également un second transistor supplémentaire (Q724) doté d'une électrode de base qui est couplée audit transistor supplémentaire (Q730) et une électrode de collecteur qui est couplée à une électrode de base dudit premier transistor (Q149).

11. Amplificateur conforme à la revendication 1, caractérisé en ce que ledit amplificateur forme un amplificateur d'erreur dans le régulateur d'une alimentation appliquée à un appareil de télévision.
